# EUROPEAN PATENT SPECIFICATION

(11) **EP 2 884 333 B1**
(45) Date of publication and mention of the grant of the patent: **01.02.2017**
(21) Application number: 14195994.0
(22) Date of filing: 03.12.2014
(51) Int. Cl.: G02F 1/1339

(54) **Liquid crystal display having differently sized spacers and manufacturing method thereof**
Flüssigkristallanzeige mit unterschiedlich grossen Abstandshaltern und Herstellungsverfahren dafür
Écran à cristaux liquides avec des espaceurs de tailles différentes et procédé de fabrication correspondant

(30) Priority: 10.12.2013 KR 20130153339
(43) Date of publication of application: 17.06.2015
(73) Proprietor: Samsung Display Co., Ltd., Gyeonggi-do (KR)
(72) Inventor: Cho, Young Je, Chungcheongnam-do 103-2304, 37 (KR); Kim, Sung Man, Seoul 25-1001, 104 (KR); Lee, Yu Jin, Asan-si, Chungcheongnam-do (KR)
(74) Representative: Dr. Weitzel & Partner

(56) References cited:
- JP-A- 2003 005 189
- JP-A- 2011 022 535
- US-A1- 2012 081 641

## Description

### BACKGROUND

### (a) Field

The invention relates to a liquid crystal display ("LCD") and a manufacturing method.

### (b) Description of the Related Art

A liquid crystal display ("LCD"), which is a flat panel display and most widely used, is a display which generally includes two display panels in which field generating electrodes are formed and a liquid crystal ("LC") layer interposed therebetween, and a voltage is applied to the electrodes so as to change directions of LC molecules of the LC layer, thereby controlling transmittance of light passing through the LC layer.

In the LC display, a pixel electrode and a common electrode which generate the electric field to the LC layer may be formed in a single display panel in which a switching element is formed.

An upper panel and a lower panel of the LCD are supported by a spacer disposed between the two panels to maintain a cell gap between the two panels.

In general, in the case of the LCD applied with an LC drip method, an LC is formed by the drip method and a sealing line enclosing a perimeter of a display area is formed on the other panel in which a column spacer is formed, and then the upper panel and the lower panel are combined for manufacturing.

In general, to consider a smear defect of the LCD and a margin of the LC drip, a main spacer maintaining the cell gap between the upper panel and the lower panel and a sub-spacer having a different pressure tolerance than the main spacer are formed to be differentiated.

When the pressure tolerance of the spacer is low, the smear defect in which the spacer is pressed such that a uniform cell gap is not maintained may be generated. To prevent the smear defect, the sub-spacer is formed at a plurality of regions to increase the pressure tolerance of the spacer. However, when the interval of the display panel facing the sub-spacer or a density of the sub-spacer is increased, a compression change ratio of the spacer is decreased. If the compression change ratio of the spacer is decreased, the LC drip margin is decreased such that control of an LC dripping amount is difficult and the LC amount is insufficient, and as a result, an empty space when the LC is not filled between the upper panel and the lower panel is generated such that light may leak.

Accordingly, to differentiate the main spacer and the sub-spacer, the main spacer and the sub-spacer are formed with different heights, and thereby the main spacer is formed to contact the opposing display panel and the sub-spacer is formed to have a predetermined interval from the opposing display panel.

### SUMMARY

When providing a pixel electrode and a common electrode generating an electric field to a liquid crystal ("LC") layer on one display panel in which a switching element is provided, an organic layer is disposed on the field generating electrode. By providing the organic layer, a step according to signal lines of the display panel including the switching element is decreased, and a step of positions where the main spacer and the sub-spacer are located is decreased. Accordingly, the difference between the height of the main spacer and the height of the sub-spacer must be large.

However, when the difference between the height of the main spacer and the height of the sub-spacer is large, a cross-section is also decreased as well as the height of the sub-spacer, thereby the sub-spacer may be unstably provided.

The invention as defined in the claims provides a liquid crystal display ("LCD") obtaining a pressure tolerance of a main spacer and a sub-spacer, and an LC drip margin, without a large difference between a height of a main spacer and a height of a sub-spacer when forming a pixel electrode and a common electrode forming an electric field to an LC layer in a display panel including a switching element and forming an organic layer under the pixel electrode and the common electrode, and a manufacturing method thereof.

According to the LCD and the manufacturing thereof according to an exemplary embodiment of the invention, when disposing the pixel electrode and the common electrode generating the electric field to the LC layer in one display panel including the switching element, the organic layer is provided under the pixel electrode and the common electrode such that the pressure tolerance of the main spacer and the sub-spacer and the LC drip margin may be obtained while the height of the main spacer and the height of the sub-spacer is not largely provided.

### BRIEF DESCRIPTION OF THE DRAWINGS

The above and other exemplary embodiments, advantages and features of this disclosure will become more apparent by describing in further detail exemplary embodiments thereof with reference to the accompanying drawings, in which:
FIG. 1 is a plan view of an exemplary embodiment of a liquid crystal display ("LCD") according to the invention.
FIG. 2 is a cross-sectional view of the LCD of FIG. 1 taken along line II-II.
FIG. 3 is a cross-sectional view of the LCD of FIG. 1 taken along line III-III.
FIG. 4 is a plan view of another exemplary embodiment of an LCD according to the invention.
FIG. 5 is a cross-sectional view of the LCD of FIG. 4 taken along line V-V.
FIG. 6 is a cross-sectional view of the LCD of FIG. 4 taken along line VI-VI.
FIG. 7 is a plan view of another exemplary embodiment of an LCD according to the invention.
FIG. 8 is a cross-sectional view of the LCD of FIG. 7 taken along line VIII-VIII.
FIG. 9 is a cross-sectional view of the LCD of FIG. 7 taken along line IX-IX.
FIG. 10 is a top plan view of a part of the LCD of FIG. 7.
FIG. 11 is a plan view partially showing an exemplary embodiment of a manufacturing process of an LCD according to the invention.
FIG. 12 is a cross-sectional view of the LCD of FIG. 11 taken along line XII-XII.
FIG. 13 is a cross-sectional view of the LCD of FIG. 11 taken along line XIII-XIII.
FIG. 14 is a plan view partially showing an exemplary embodiment of a manufacturing process of an LCD according to the invention.
FIG. 15 is a cross-sectional view of the LCD of FIG. 14 taken along line XV-XV.
FIG. 16 is a cross-sectional view of the LCD of FIG. 14 taken along line XVI-XVI.
FIG. 17 is a cross-sectional view partially showing an exemplary embodiment of a manufacturing process of an LCD according to the invention, taken along line XV-XV of FIG. 14.
FIG. 18 is a cross-sectional view partially showing an exemplary embodiment of a manufacturing process of an LCD according to the invention, taken along line XVI-XVI of FIG. 14.

### DETAILED DESCRIPTION

The invention will be described more fully hereinafter with reference to the accompanying drawings, in which exemplary embodiments of the invention are shown.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

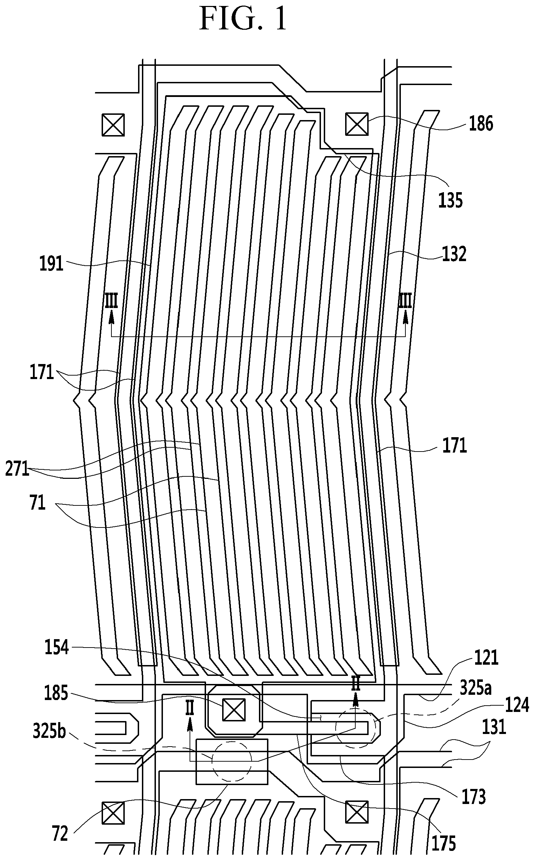

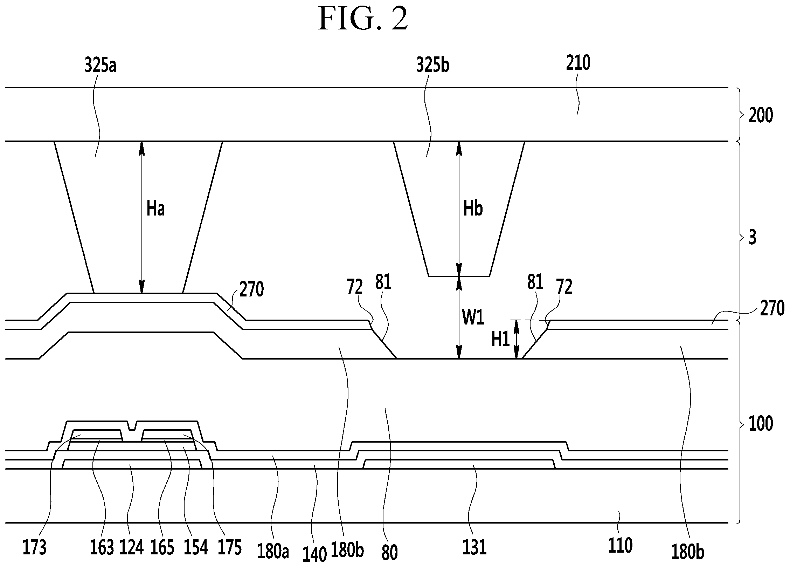

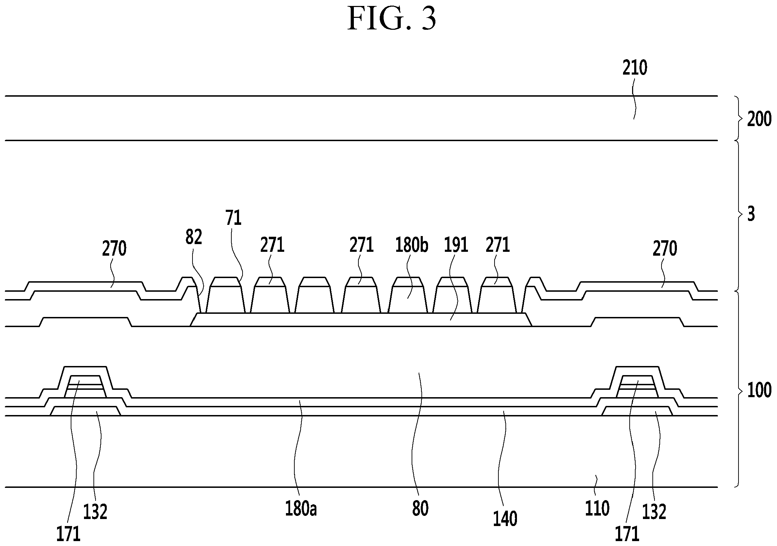

Now, a liquid crystal display ("LCD") according to an exemplary embodiment of the invention will be described with reference to FIGS. 1 to 3. FIG. 1 is a plan view of an LCD according to an exemplary embodiment of the invention, FIG. 2 is a cross-sectional view of the LCD of FIG. 1 taken along the line II-II, and FIG. 3 is a cross-sectional view of the LCD of FIG. 1 taken along the line III-III.

Referring to FIGS. 1 to 3, an LCD according to an exemplary embodiment of the invention includes a first display panel 100 and a second display panel 200 opposite to each other, and a liquid crystal ("LC") layer 3 injected between the display panels.

Firstly, the first display panel 100 will be described.

A gate conductor including a gate line 121 and a common voltage line 131 is disposed on a first insulation substrate 110 including transparent glass or plastic, for example.

The gate line 121 includes a gate electrode 124 and a wide gate pad portion (not illustrated) for connection with another layer or an external driving circuit, for example.

The common voltage line 131 extends in a direction parallel to the gate line 121, and includes a stem portion 132 and an extension portion 135 extending along a direction in which a data line 171 is extended.

In an exemplary embodiment, the gate conductors 121, 124, 131, 132, and 135 may include an aluminum-based metal such as aluminum (Al) or an aluminum alloy, a silver-based metal such as silver (Ag) or a silver alloy, a copper-based metal such as copper (Cu) or a copper alloy, a molybdenum-based metal such as molybdenum (Mo) or a molybdenum alloy, chromium (Cr), tantalum (Ta), titanium (Ti) and any combinations thereof. In another exemplary embodiment, the gate line 121 may have a multilayered structure including at least two conductive layers having different physical properties.

A gate insulating layer 140 including a silicon nitride (SiNx) or a silicon oxide (SiOx), for example, is disposed on the gate conductors 121, 124, 131, 132, and 135. In an exemplary embodiment, the gate insulating layer 140 may have a multilayered structure including at least two insulating layers having different physical properties.

A semiconductor 154 including amorphous silicon or polysilicon is disposed on the gate insulating layer 140. In an exemplary embodiment, the semiconductor 154 may include an oxide semiconductor.

Ohmic contacts 163 and 165 are disposed on the semiconductor 154. In an exemplary embodiment, the ohmic contacts 163 and 165 may include a material such as n+ hydrogenated amorphous silicon in which an n-type impurity such as phosphorus is doped at a high concentration, or a silicide. The ohmic contacts 163 and 165 may be disposed as a pair on the semiconductor 154. In a case where the semiconductor 154 includes an oxide semiconductor, the ohmic contacts 163 and 165 may be omitted.

A data conductor which includes the data line 171 including a source electrode 173 and a drain electrode 175 is positioned on the ohmic contacts 163 and 165, respectively, and the gate insulating layer 140.

In an exemplary embodiment, the data line 171 includes a data pad portion (not illustrated) for connection with another layer or an external driving circuit.

The data line 171 transfers a data signal and mainly extends in a vertical direction to cross the gate line 121 in a plan view.

In this case, the data line 171 may have a first curved portion having a curved shape in order to obtain maximum transmittance of the LCD, and the curved portion may have a "V" shape in which the curved portion meets in a middle region of a pixel area.

The data line 171 including the source electrode 173 and the drain electrode 175 faces the source electrode 173 on the semiconductor 154.

The gate electrode 124, the source electrode 173, and the drain electrode 175 provide one thin film transistor ("TFT") together with the semiconductor 154, and a channel of the TFT is positioned in the semiconductor 154 between the source electrode 173 and the drain electrode 175.

In an exemplary embodiment, the data line 171 and the drain electrode 175 may include refractory metal such as molybdenum, chromium, tantalum, and titanium or an alloy thereof, and may have a multilayered structure including a refractory metal layer (not illustrated) and a low resistive conductive layer (not illustrated). In an exemplary embodiment, the multilayered structure may include a double layer including a chromium or molybdenum (alloy) lower layer and an aluminum (alloy) upper layer, and a triple layer including a molybdenum (alloy) lower layer, an aluminum (alloy) intermediate layer, and a molybdenum (alloy) upper layer, for example. However, the data line 171 and the drain electrode 175 may include various other metals or conductors in addition to the metals.

A first passivation layer 180a is disposed on the data conductors 171, 173, and 175, the gate insulating layer 140, and the exposed portion of the semiconductor 154. In an exemplary embodiment, the first passivation layer 180a includes an inorganic insulating material, for example.

An organic layer 80 is disposed on the first passivation layer 180a. In an exemplary embodiment, the organic layer 80 may be a color filter. When the organic layer 80 is a color filter, the organic layer 80 may uniquely display one of primary colors. In an exemplary embodiment, the primary colors may include the three primary colors such as red, green, and blue, or yellow, cyan, and magenta, and the like. Although not illustrated, the color filter may further include a color filter which displays a mixed color of the primary colors or white, in addition to the primary colors.

A surface of the organic layer 80 is substantially flat, thereby reducing a step caused by a plurality of underlying signal lines.

A pixel electrode 191 is disposed on the organic layer 80. In an exemplary embodiment, the pixel electrode 191 is disposed in one pixel area and may have a planar shape, that is, a plate shape, for example.

The pixel electrode 191 is connected to the drain electrode 175 through a first contact hole 185 defined in the first passivation layer 180a and the organic layer 80, thereby receiving a data voltage from the drain electrode 175.

A second passivation layer 180b is disposed on the pixel electrode 191. The second passivation layer 180b includes an inorganic insulating material or an organic insulating material.

A common electrode 270 is disposed on the second passivation layer 180b. The common electrode 270 is disposed on a surface of the first substrate 110, and a plurality of third cutouts 71 is defined in the common electrode 270 at the pixel area and a first cutout 72 is defined in common electrode 270 outside of the pixel area (this area being also called a non-opening region) overlapping the gate conductor such as the gate line 121 or the common voltage line 131. The common electrode 270 includes a plurality of branch electrodes 271 defined by the plurality of third cutouts 71. A plurality of branch electrodes 271 overlaps the pixel electrode 191 of the plane shape.

Although not shown, according to an LCD of another exemplary embodiment of the invention, a cutout defined at a region overlapping the first contact hole 185 may be further defined in the common electrode 270. By defining the cutout at a region overlapping the first contact hole 185, an overlapping region between the common electrode 270 and the pixel electrode 191 can be effectively reduced, and accordingly, an unnecessary increase of a capacitance between the common electrode 270 and the pixel electrode 191 may be prevented, thereby preventing a signal delay of the voltage charged to the pixel electrode.

A second cutout 81 is defined in the second passivation layer 180b at the same position as the first cutout 72 of the common electrode 270 and having the same plane shape as the first cutout 72, and a plurality of fourth cutouts 82 having the same plane shape as the plurality of third cutouts 71 of the common electrode 270 is defined in the second passivation layer 180b.

In detail, an edge of the first cutout 72 of the common electrode 270 defined at the non-opening region overlaps the edge of the second cutout 81 of the second passivation layer 180b, and the edge of the plurality of third cutouts 71 of the common electrode 270 defined at the pixel area overlaps the edge of the plurality of fourth cutouts 82 of the second passivation layer 180b.

The common electrode 270 is connected to the extension portion 135 of the common voltage line 131 through a second contact hole 186 defined in the gate insulating layer 140, the first passivation layer 180a, the organic layer 80, and the second passivation layer 180b. However, in an LCD according to another exemplary embodiment of the invention, the common voltage line 131 may be provided outside the display area, the common electrode 270 is applied with the common voltage from the outside of the display area, and the common voltage line 131 may not be provided inside the display area.

Although not shown, a first alignment layer may be applied on the common electrode 270, it may be a horizontal alignment layer, and it may be rubbed in a predetermined direction. However, in the LCD according to another exemplary embodiment of the invention, the first alignment layer may include a photoreactive material to be photo-aligned.

Now, the second display panel 200 will be described.

A first spacer 325a and a second spacer 325b are provided on a second insulation substrate 210 including a transparent glass or plastic, for example.

The first spacer 325a is provided at a position overlapping a TFT including the gate electrode 124, the semiconductor 154, the source electrode 173, and the drain electrode 175, and the second spacer 325b is provided at a position overlapping the first cutout 72 of the common electrode 270 and the second cutout 81 of the second passivation layer 180b.

Although not shown, a second alignment layer may be applied on an inner surface of the second display panel 200, it may be a horizontal alignment layer, and it may be rubbed in a predetermined direction. However, in the LCD according to another exemplary embodiment of the invention, the second alignment layer may include a photoreactive material to be photo-aligned.

In an exemplary embodiment, the LC layer 3 includes an LC material having positive dielectric anisotropy. The LC molecules of the LC layer 3 are aligned so that long axes thereof are parallel to the display panels 100 and 200. However, in an LCD according to another exemplary embodiment of the invention, the LC layer 3 may have negative dielectric anisotropy.

The pixel electrode 191 receives a data voltage from the drain electrode 175 and the common electrode 270 receives a reference voltage having a predetermined level from a reference voltage applying unit disposed outside the display area.

The pixel electrode 191 and the common electrode 270, which are field generating electrodes, generate an electric field so that LC molecules of the LC layer 3 positioned on the two electrodes 191 and 270 rotate in a direction parallel to the direction of the electric field. Polarization of light which passes through the LC layer varies according to the rotation direction of the LC molecules determined as described above.

As described above, the first spacer 325a is provided at a position overlapping a TFT including the gate electrode 124, the semiconductor 154, the source electrode 173, and the drain electrode 175, and the second spacer 325b is provided at a position overlapping the first cutout 72 of the common electrode 270 and the second cutout 81 of the second passivation layer 180b. However, in an exemplary embodiment, the first spacer 325a may be provided at a region that does not overlap the TFT.

As shown in FIG. 2, a height of the region where the first cutout 72 of the common electrode 270 and the second cutout 81 of the second passivation layer 180b has a height difference of a first height HI, compared with a height of other regions. The first height H1 has a sum value of a thickness of the second passivation layer 180b and a thickness of the common electrode 270.

Accordingly, the first spacer 325a provided at the second display panel 200 is not separated from the first display panel 100, and an interval W1 between the second spacer 325b and the first display panel 100 is greater than the first height H1.

If a difference between the second height Ha of the first spacer 325a and the third height Hb of the second spacer 325b does not exist, the first spacer 325a as the main spacer contacts an upper surface of the first display panel 100, but the second spacer 325b as the sub-spacer and the upper surface of the first display panel 100 have substantially the same interval W1 as the first height H1. Second and third heights Ha and Hb may be a maximum distance between upper and lower surfaces of the spacer, in a cross-thickness direction.

If the difference between the second height Ha of the first spacer 325a and the third height Hb of the second spacer 325b is generated, the interval W1 between the second spacer 325b and the first display panel 100 is widened by the difference between the second height Ha of the first spacer 325a and the third height Hb of the second spacer 325b. In an exemplary embodiment, the interval W1 may include and/or be defined by the sum value of the first height H1 by the first cutout 72 of the common electrode 270 and the second cutout 81 of the second passivation layer 180b, and the difference of the second height Ha of the first spacer 325a and the third height Hb of the second spacer 325b.

In this way, according to the LCD according to an exemplary embodiment of the invention, while the organic layer 80 includes the substantially flat surface, and the pixel electrode 191 and the common electrode 270 are both disposed on the first display panel 100, by providing the step between the region where the first cutout 72 of the common electrode 270 and the second cutout 81 of the second passivation layer 180b are defined and the other region, the interval between the second spacer 325b as the sub-spacer and the facing first display panel 100 may be widely maintained.

In this way, by widely maintaining the interval between the second spacer 325b as the sub-spacer and the facing first display panel 100, when the difference between the height of the first spacer 325a as the main spacer and the height of the second spacer 325b as the sub-spacer is not large, the pressure tolerance of the main spacer and the sub-spacer and the LC drip margin may be obtained.

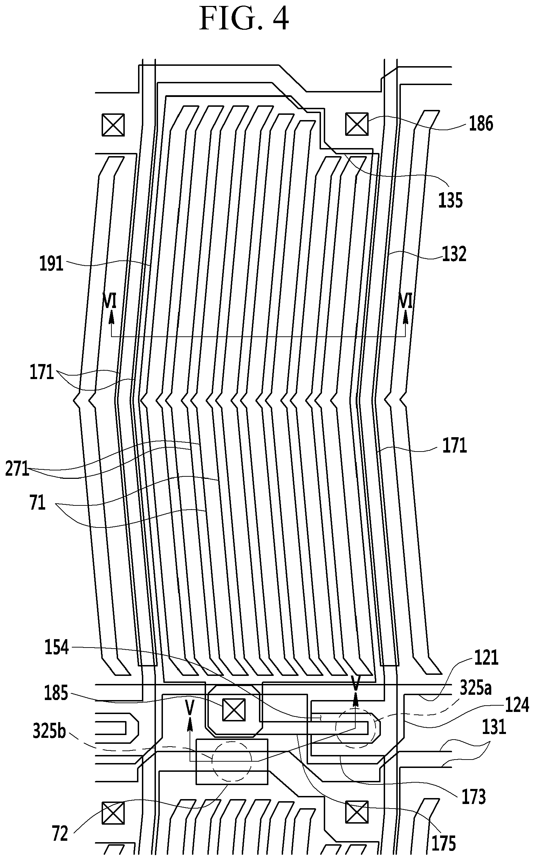

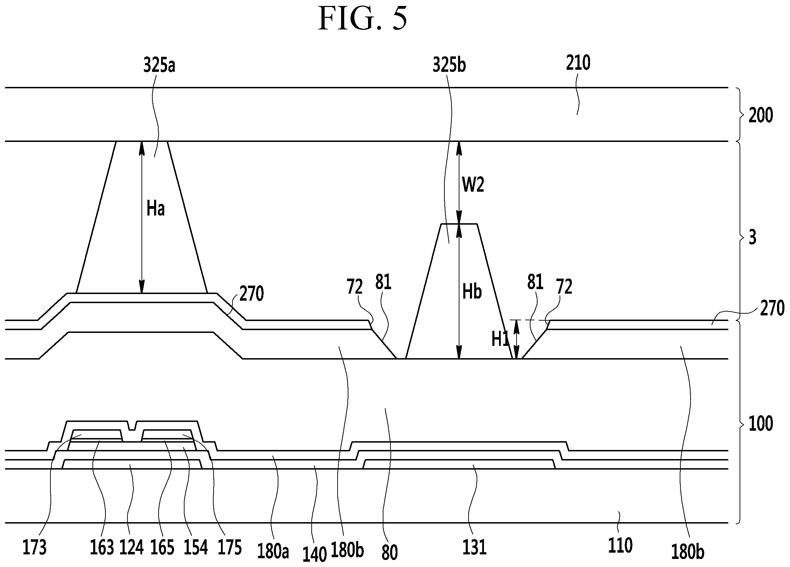

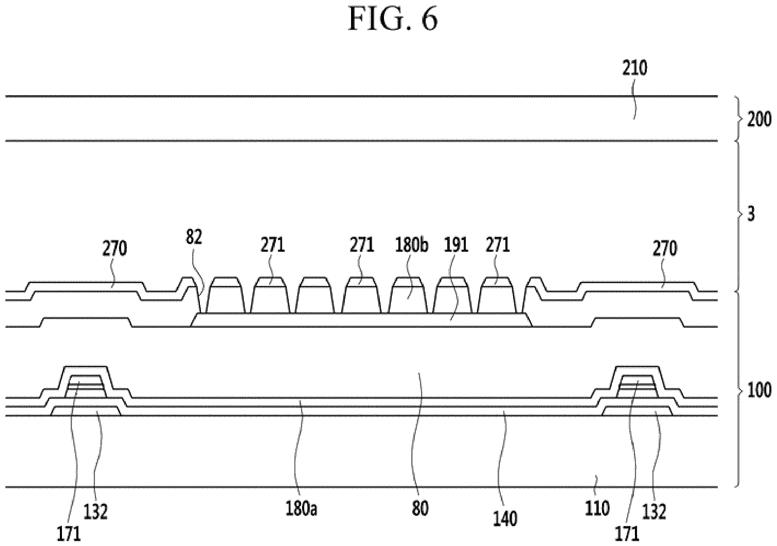

Next, an LCD according to another exemplary embodiment of the invention will be described with reference to FIGS. 4 to 6. FIG. 4 is a plan view of an LCD according to another exemplary embodiment of the invention, FIG. 5 is a cross-sectional view of the LCD of FIG. 4 taken along the line V-V, and FIG. 6 is a cross-sectional view of the LCD of FIG. 4 taken along the line VI-VI.

Referring to FIGS. 4 to 6, the LCD according to the illustrated exemplary embodiment is similar to the LCD according to the exemplary embodiment described with reference to FIGS. 1 to 3. A detailed description of like constituent elements is omitted.

Referring to FIGS. 4 to 6, an LCD according to another exemplary embodiment of the invention includes a first display panel 100 and a second display panel 200 opposite to each other, and an LC layer 3 injected between the display panels.

The first display panel 100 is described first.

A gate conductor (121, 124, 131, 132, and 135) including a gate line 121 and a common voltage line 131 is disposed on a first insulation substrate 110 including transparent glass or plastic, for example.

A gate insulating layer 140 including a silicon nitride (SiNx) or a silicon oxide (SiOx), for example, is disposed on the gate conductor gate conductor (121, 124, 131, 132, and 135).

A semiconductor 154 including amorphous silicon or polysilicon, for example, is disposed on the gate insulating layer 140. In an exemplary embodiment, the semiconductor 154 may include an oxide semiconductor.

Ohmic contacts 163 and 165 are disposed on the semiconductor 154. In a case where the semiconductor 154 is an oxide semiconductor, the ohmic contacts 163 and 165 may be omitted.

A data conductor including a data line 171 including a source electrode 173 and a drain electrode 175 is positioned on the ohmic contacts 163 and 165 and the gate insulating layer 140.

The data line 171 includes the source electrode 173, and the drain electrode 175 faces the source electrode 173 on the semiconductor 154.

A first passivation layer 180a is disposed on the data conductor (171, 173, and 175), the gate insulating layer 140, and the exposed portion of the semiconductor 154. In an exemplary embodiment, the first passivation layer 180a includes an inorganic insulating material.

An organic layer 80 is disposed on the first passivation layer 180a. A surface of the organic layer 80 is substantially flat, thereby reducing a step caused by a plurality of underlying signal lines.

A pixel electrode 191 is disposed on the organic layer 80. In an exemplary embodiment, the pixel electrode 191 is disposed in one pixel area and may have a planar shape, that is, a plate shape, for example.

The pixel electrode 191 is connected to the drain electrode 175 through a first contact hole 185 defined in the first passivation layer 180a and the organic layer 80, thereby receiving a data voltage from the drain electrode 175.

A second passivation layer 180b is disposed on the pixel electrode 191. The second passivation layer 180b includes an inorganic insulating material or an organic insulating material.

A common electrode 270 is disposed on the second passivation layer 180b. The common electrode 270 is disposed on a surface of the first substrate 110, and a plurality of third cutouts 71 may be defined in the common electrode 270 at the pixel area and a first cutout 72 may be defined in the common electrode 270 at a non-opening region overlapping the gate conductor such as the gate line 121 or the common voltage line 131. The common electrode 270 includes a plurality of branch electrodes 271 defined by the plurality of third cutouts 71. The plurality of branch electrodes 271 overlaps the pixel electrode 191 of the plane shape.

A second cutout 81 is defined in the second passivation layer 180b at the same position as the first cutout 72 of the common electrode 270 and having the same plane shape as the first cutout 72, and a plurality of fourth cutouts 82 having the same plane shape as the plurality of third cutouts 71 of the common electrode 270 is defined in the second passivation layer 180b.

In detail, an edge of the first cutout 72 of the common electrode 270 defined at the non-opening region overlaps the edge of the second cutout 81 of the second passivation layer 180b, and the edge of the plurality of third cutouts 71 of the common electrode 270 defined at the pixel area overlaps an edge of the plurality of fourth cutouts 82 of the second passivation layer 180b.

The first spacer 325a is provided at a position overlapping a TFT including the gate electrode 124, the semiconductor 154, the source electrode 173, and the drain electrode 175, and the second spacer 325b is provided at a position overlapping the first cutout 72 of the common electrode 270 and the second cutout 81 of the second passivation layer 180b.

Although not shown, according to an LCD of another exemplary embodiment of the invention, a cutout may be further defined in the common electrode 270 at a region overlapping the first contact hole 185. By defining the cutout at the region overlapping the first contact hole 185, an overlapping region between the common electrode 270 and the pixel electrode 191 may be decreased, and accordingly, an unnecessary increase of a capacitance between the common electrode 270 and the pixel electrode 191 may be prevented, thereby preventing a signal delay of the voltage charged to the pixel electrode.

Now, the second display panel 200 will be described.

A second alignment layer (not shown) is disposed on a second insulation substrate 210 including the transparent glass or plastic, for example. In an exemplary embodiment, the second alignment layer is the horizontal alignment layer, and is rubbed in a predetermined direction. However, in an LCD according to another exemplary embodiment of the invention, the second alignment layer may include a photoreactive material to be photo-aligned. In an exemplary embodiment, a light blocking member (not shown) may be disposed on the second insulation substrate 210.

In an exemplary embodiment, the LC layer 3 includes an LC material having positive dielectric anisotropy. The LC molecules of the LC layer 3 are aligned so that long axes thereof are parallel to the panels 100 and 200. However, in an LCD according to another exemplary embodiment of the invention, the LC layer 3 may have negative dielectric anisotropy.

The pixel electrode 191 receives a data voltage from the drain electrode 175 and the common electrode 270 receives a reference voltage having a predetermined level from a reference voltage applying unit disposed outside the display area.

The pixel electrode 191 and the common electrode 270, which are field generating electrodes, generate an electric field so that LC molecules of the LC layer 3 positioned on the two electrodes 191 and 270 rotate in a direction parallel to the direction of the electric field. Polarization of light which passes through the LC layer varies according to the rotation direction of the LC molecules determined as described above.

As described above, the first spacer 325a is provided at a position overlapping a TFT including the gate electrode 124, the semiconductor 154, the source electrode 173, and the drain electrode 175, and the second spacer 325b is provided at a position overlapping the first cutout 72 of the common electrode 270 and the second cutout 81 of the second passivation layer 180b. However, in another exemplary embodiment, the first spacer 325a may be provided at a region that does not overlap the TFT.

As shown in FIG. 5, a height of the region where the first cutout 72 of the common electrode 270 and the second cutout 81 of the second passivation layer 180b has a height difference of a first height HI, compared with a height of other regions. The first height H1 has a sum value of a thickness of the second passivation layer 180b and a thickness of the common electrode 270.

Accordingly, the first spacer 325a provided at the first display panel 100 and the second display panel 200 are not separated, and the interval W2 between the second spacer 325b provided at the first display panel 100 and the second display panel 200 is greater than the first height H1.

If a difference of the second height Ha of the first spacer 325a and the third height Hb of the second spacer 325b does not exist, the first spacer 325a as the main spacer contacts the surface of the second display panel 200, however the second spacer 325b as the sub-spacer and the surface of the second display panel 200 have substantially the same interval W2 as the first height H1.

If the difference between the second height Ha of the first spacer 325a and the third height Hb of the second spacer 325b is generated, the interval W2 between the second spacer 325b and the second display panel 200 is widened by the difference of the second height Ha of the first spacer 325a and the third height Hb of the second spacer 325b. In an exemplary embodiment, the interval W2 may include and/or be defined by, the sum value of the first height H1 by the first cutout 72 of the common electrode 270 and the second cutout 81 of the second passivation layer 180b and the difference of the second height Ha of the first spacer 325a and the third height Hb of the second spacer 325b.

In this way, in the LCD according to an exemplary embodiment of the invention, while the organic layer 80 having the substantially flat surface is increased and the pixel electrode 191 and the common electrode 270 are both disposed on the first display panel 100, by providing the step between the region where the first cutout 72 of the common electrode 270 and the second cutout 81 of the second passivation layer 180b is defined and the other region, the interval between the second spacer 325b as the sub-spacer and the facing display panel may be widely maintained.

In this way, by widely maintaining the interval between the second spacer 325b as the sub-spacer and the facing display panel, when the difference between the height of the first spacer 325a as the main spacer and the height of the second spacer 325b as the sub-spacer is not large, the pressure tolerance of the main spacer and the sub-spacer and the LC drip margin may be obtained.

All characteristics of the LCD according to the exemplary embodiment of the invention that is shown in FIGS. 1 to 3 may be applied to all LCDs according to the illustrated exemplary embodiment.

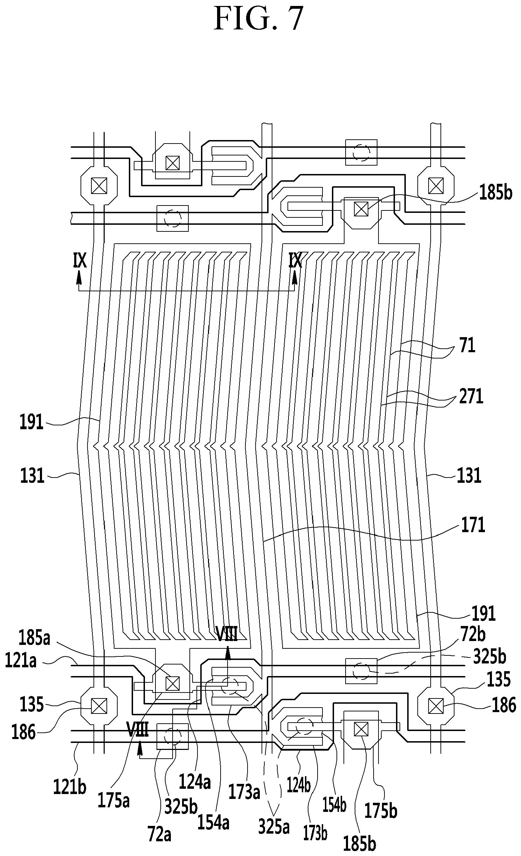

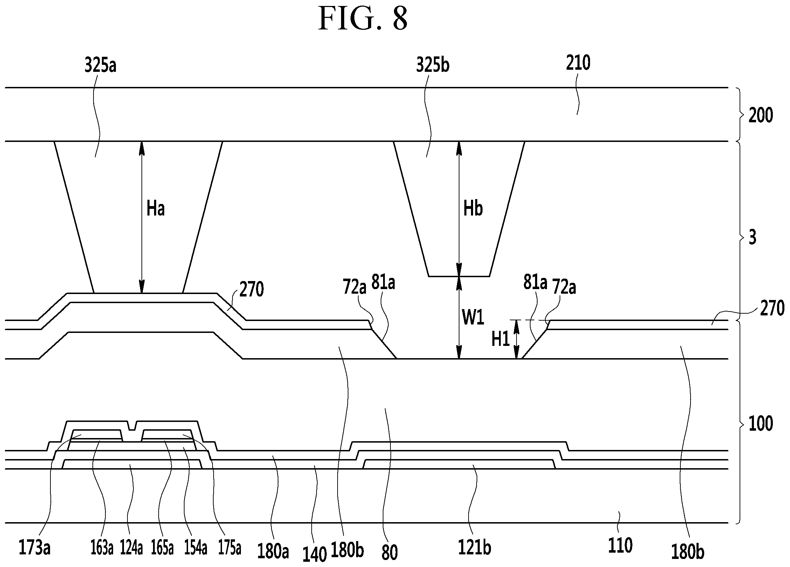

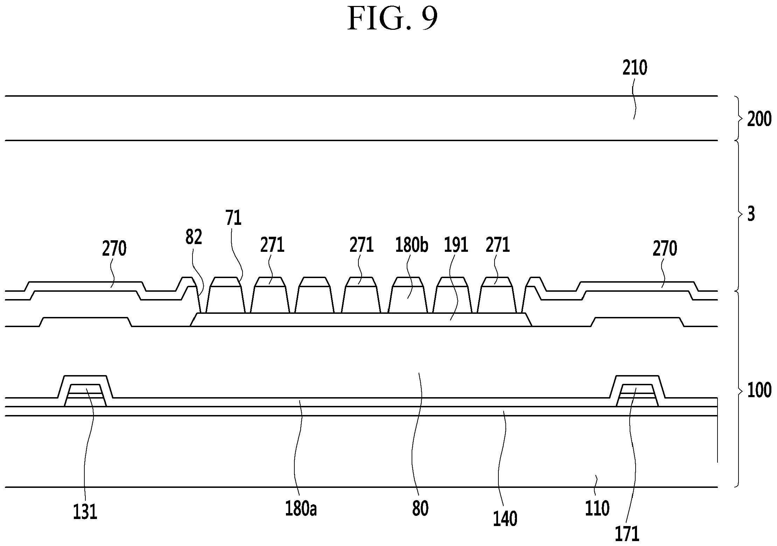

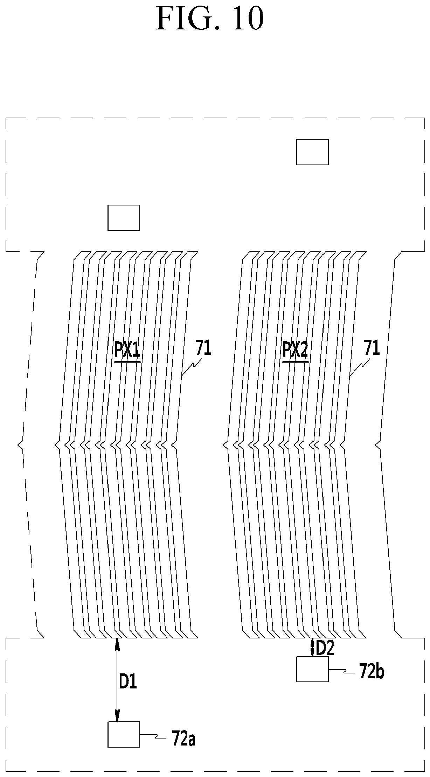

Next, an LCD according to another exemplary embodiment of the invention will be described with reference to FIGS. 7 to 10. FIG. 7 is a plan view of an LCD according to another exemplary embodiment of the invention. FIG. 8 is a cross-sectional view of the LCD of FIG. 7 taken along the line VIII-VIII. FIG. 9 is a cross-sectional view of the LCD of FIG. 7 taken along the line IX-IX. FIG. 10 is a top plan view of a part of the LCD of FIG. 7.

Referring to FIGS. 7 to 9, an LCD according to an exemplary embodiment of the invention includes a first display panel 100 and a second display panel 200 opposite to each other, and an LC layer 3 injected between the display panels.

Firstly, the first display panel 100 will be described.

A plurality of gate lines 121 a and 121b including a first gate line 121 a and a second gate line 121b are disposed on a first insulation substrate 110 including transparent glass or plastic, for example.

The first gate line 121 a and the second gate line 121 b are disposed as a pair between pixel rows.

The first gate line 121a includes a first gate electrode 124a, and the second gate line 121b includes a second gate electrode 124b.

A gate insulating layer 140 is disposed on the plurality of gate line 121 a and 121 b.

A first semiconductor 154a and a second semiconductor 154b are disposed on the gate insulating layer 140. In an exemplary embodiment, the semiconductors 154a and 154b may include an oxide semiconductor.

Ohmic contacts 163a and 165a are disposed on each of the semiconductors 154a and 154b. When the semiconductors 154a and 154b include the oxide semiconductor, the ohmic contacts 163a and 165a may be omitted.

A data conductor including a plurality of data lines 171, a plurality of drain electrodes 175a and 175b, and a plurality of common voltage lines 131 are disposed on the ohmic contacts 163a and 165a.

The data line 171 transmits a data signal and mainly extends in a longitudinal direction thereby intersecting the gate lines 121a and 121b. Each data line 171 is disposed one by one for two columns of the pixels.

The data line 171 may have a first curved portion having a curved shape in order to acquire maximum transmittance of the LCD, and the curved portion may have a "V" shape in a middle region of the pixel area in a plan view.

Each of the data lines 171 is disposed between two pixel columns and connected to the pixel electrodes 191 disposed at a left side and a right side of each of the data lines 171, thereby applying the data voltage such that the number of data lines 171 may be reduced by half. Accordingly, costs of the LCD may be reduced.

The data line 171 includes a first source electrode 173a extending toward the first gate electrode 124a, and a second source electrode 173b toward the second gate electrode 124b.

The first drain electrode 175a includes an end facing the first source electrode 173a with respect to the first gate electrode 124a and the other end facing a wide area.

The second drain electrode 175b includes an end facing the second source electrode 173b with respect to the second gate electrode 124b and the other end facing a wide area.

The common voltage line 131 extends parallel to the data line 171 and the two pixel columns may be disposed between two common voltage lines 131. The data line 171 and the common voltage line 131 may be alternately disposed.

A first passivation layer 180a is disposed on a plurality of data lines 171, a plurality of drain electrodes 175a and 175b, and a plurality of common voltage lines 131. In an exemplary embodiment, the first passivation layer 180a may include the organic insulating material or the inorganic insulating material.

An organic layer 80 is disposed on the first passivation layer 180a. In an exemplary embodiment, the organic layer 80 may be a color filter. When the organic layer 80 is a color filter, the organic layer 80 may uniquely display one of primary colors. In an exemplary embodiment, the primary colors may include three primary colors such as red, green, and blue, or yellow, cyan, and magenta, and the like. Although not illustrated, the color filter may further include a color filter which displays a mixed color of the primary colors or white, in addition to the primary colors.

A surface of the organic layer 80 is substantially flat, thereby reducing a step caused by a plurality of underlying signal lines.

A pixel electrode 191 is disposed on the organic layer 80. In an exemplary embodiment, the pixel electrode 191 is disposed in one pixel area and may have a planar shape, that is, a plate shape, for example.

The pixel electrode 191 is connected to the first drain electrode 175a or the second drain electrode 175b through a third contact hole 185a or a fourth contact hole 185b of the first passivation layer 180a and the organic layer 80, thereby receiving the data voltage from the drain electrode 175.

A second passivation layer 180b is disposed on the pixel electrode 191. In an exemplary embodiment, the second passivation layer 180b includes the inorganic insulating material or the organic insulating material.

A common electrode 270 is disposed on the second passivation layer 180b. The common electrode 270 is disposed on a surface of the first substrate 110. A plurality of third cutouts 71 is defined in the common electrode 270 at the pixel area and a first cutout 72a and a fifth cutout 72b are defined in the common electrode 270 at a non-opening region overlapping the gate conductor such as the first gate line 121a and the second gate line 121b. The common electrode 270 includes a plurality of branch electrodes 271 defined by the plurality of third cutouts 71. The plurality of branch electrodes 271 overlaps the pixel electrode 191 of the plane shape.

Although not shown, according to an LCD of another exemplary embodiment of the invention, a cutout may be further defined in the common electrode 270 at a region overlapping the third contact hole 185a or the fourth contact hole 185b. By defining the cutout at a region overlapping the third contact hole 185a or the fourth contact hole 185b, an overlapping region between the common electrode 270 and the pixel electrode 191 may be decreased, and accordingly, an unnecessary increase of a capacitance between the common electrode 270 and the pixel electrode 191 may be prevented, thereby preventing a signal delay of the voltage charged to the pixel electrode.

A seventh cutout 81a and an eighth cutout (not shown) is defined in the second passivation layer 180b at the same position as the first cutout 72a and the fifth cutout 72b of the common electrode 270 and have the same plane shape as the first cutout 72, and a plurality of fourth cutouts 82 having the same plane shape as the plurality of third cutouts 71 of the common electrode 270 is defined in the second passivation layer 180b.

In detail, an edge of the first cutout 72a and the fifth cutout 72b of the common electrode 270 provided at the non-opening region overlaps the edge of the seventh cutout 81a and the eighth cutout (not shown) of the second passivation layer 180b, and the edge of the plurality of third cutouts 71 of the common electrode 270 provided at the pixel area overlaps the edge of the plurality of fourth cutouts 82 of the second passivation layer 180b.

The common electrode 270 is connected to the extension portion 135 of the common voltage line 131 through the second contact hole 186 of the gate insulating layer 140, the first passivation layer 180a, the organic layer 80, and the second passivation layer 180b. However, in an LCD according to another exemplary embodiment of the invention, the common voltage line 131 may be provided outside the display area, the common electrode 270 is applied with the common voltage from the outside of the display area, and the common voltage line 131 may not be provided inside the display area.

Although not shown, a first alignment layer may be applied on the common electrode 270, it may be a horizontal alignment layer, and it may be rubbed in a predetermined direction. However, in the LCD according to another exemplary embodiment of the invention, the first alignment layer may include a photoreactive material to be photo-aligned.

Now, the second display panel 200 will be described.

A first spacer 325a and a second spacer 325b are provided on a second insulation substrate 210 including transparent glass or plastic.

The first spacer 325a is provided at a position overlapping a TFT including the gate electrode 124, the semiconductor 154, the source electrode 173, and the drain electrode 175, and the second spacer 325b is provided at a position overlapping the first cutout 72a or the firth cutout 72b of the common electrode 270 and the seventh cutout 81a or the eighth cutout (not shown) of the second passivation layer 180b.

Although not shown, a second alignment layer may be applied on an inner surface of the second display panel 200, it may be a horizontal alignment layer, and it may be rubbed in a predetermined direction. However, in the LCD according to another exemplary embodiment of the invention, the second alignment layer may include a photoreactive material to be photo-aligned.

The LC layer 3 includes an LC material having positive dielectric anisotropy. The LC molecules of the LC layer 3 are aligned so that long axes thereof are parallel to the panels 100 and 200. However, in an LCD according to another exemplary embodiment of the invention, the LC layer 3 may have negative dielectric anisotropy.

The pixel electrode 191 receives a data voltage from the drain electrode 175 and the common electrode 270 receives a reference voltage having a predetermined level from a reference voltage applying unit disposed outside the display area.

The pixel electrode 191 and the common electrode 270, which are field generating electrodes, generate an electric field so that LC molecules of the LC layer 3 positioned on the two electrodes 191 and 270 rotate in a direction parallel to the direction of the electric field. Polarization of light which passes through the LC layer varies according to the rotation direction of the LC molecules determined as described above.

As described above, the first spacer 325a is provided at the position overlapping the TFT including the gate electrode 124, the semiconductor 154, the source electrode 173, and the drain electrode 175, and the second spacer 325b is provided at the position overlapping the first cutout 72a or the fifth cutout 72b of the common electrode 270 and the seventh cutout 81a or the eighth cutout (not shown) of the second passivation layer 180b. However, in an exemplary embodiment, the first spacer 325a may be provided at a region that does not overlap the TFT.

As shown in FIG. 8, a height of the region where the first cutout 72a or the fifth cutout 72b of the common electrode 270 and the seventh cutout 81a or the eighth cutout (not shown) of the second passivation layer 180b has the height difference of the first height HI, compared with a height of other regions. The first height HI has the sum value of the thickness of the second passivation layer 180b and the thickness of the common electrode 270.

Accordingly, the first spacer 325a provided at the second display panel 200 is not separated from the first display panel 100, and the interval W1 between the second spacer 325b and the first display panel 100 is greater than the first height H1.

If a difference of the second height Ha of the first spacer 325a and the third height Hb of the second spacer 325b does not exist, the first spacer 325a as the main spacer contacts an upper surface of the first display panel 100, however the second spacer 325b as the sub-spacer and the upper surface of the first display panel 100 has substantially the same interval W1 as the first height H1.

If the difference between the second height Ha of the first spacer 325a and the third height Hb of the second spacer 325b is generated, the interval W1 between the second spacer 325b and the first display panel 100 is widened by the difference between the second height Ha of the first spacer 325a and the third height Hb of the second spacer 325b, thereby having the sum value of the first height H1 by the first cutout 72a or the fifth cutout 72b of the common electrode 270 and the seventh cutout 81 a or the eighth cutout (not shown) of the second passivation layer 180b and the difference of the second height Ha of the first spacer 325a and the third height Hb of the second spacer 325b.

In this way, according to the LCD according to an exemplary embodiment of the invention, while the organic layer 80 having the substantially flat surface is increased and the pixel electrode 191 and the common electrode 270 are both disposed on the first display panel 100, by providing the step between the region where the first cutout 72a or the fifth cutout 72b of the common electrode 270 and the seventh cutout 81a or the eighth cutout (not shown) of the second passivation layer 180b are defined and the other region, the interval between the second spacer 325b as the sub-spacer and the facing first display panel 100 may be widely maintained.

In this way, by widely maintaining the interval between the second spacer 325b as the sub-spacer and the facing first display panel 100, when the difference between the height of the first spacer 325a as the main spacer and the height of the second spacer 325b as the sub-spacer is not large, the pressure tolerance of the main spacer and the sub-spacer and the LC drip margin may be obtained.

Next, the cutout defined in the common electrode 270 will be described in detail with reference to FIG. 10.

FIG. 10 is a top plan view of the common electrode 270 of two pixels positioned at the same pixel row.

Referring to FIG. 10, a first interval D1 which is a shortest interval between the first cutout 72a of the common electrode 270 and the third cutout 71 of the common electrode 270 defined at the first pixel PX1 among two adjacent pixels is different from a second interval D2 which is a shortest interval between the fifth cutout 72b of the common electrode 270 and the third cutout 71 of the common electrode 270 defined at the second pixel PX2 among two adjacent pixels.

Although not shown, in a case of a third pixel adjacent to the first pixel PX1 in the left side, like the second pixel PX2, the third cutout 71 and the fifth cutout 72b may be defined in the common electrode 270, and the shortest interval between the fifth cutout 72b and the third cutout 71 of the common electrode 270 of the third pixel may be the same as the second interval D2. Similarly, although not shown, in a case of the fourth pixel adjacent to the second pixel PX2 in the right, like the first pixel PX1, the common electrode 270 may have the third cutout 71 and the first cutout 72a, and the shortest interval between the first cutout 72a and the third cutout 71 of the common electrode 270 of the third pixel may be the same as the first interval D1.

In this way, according to the LCD according to the exemplary embodiment, in two adjacent pixels the first cutout 72a and the fifth cutout 72b of the common electrode 270 overlapping the second spacer 325b may be provided to have the different interval from the third cutout 71 of the common electrode 270. That is, in two adjacent pixels the first cutout 72a and the fifth cutout 72b of the common electrode 270 overlapping the second spacer 325b may be positioned at the relatively different positions with reference to the third cutout 71 of the common electrode 270.

According to the LCD of the exemplary embodiment, the first spacer 325a and the second spacer 325b are provided on the second display panel 200, and according to an LCD of another exemplary embodiment of the invention, the first spacer 325a and the second spacer 325b may be provided on the first display panel 100.

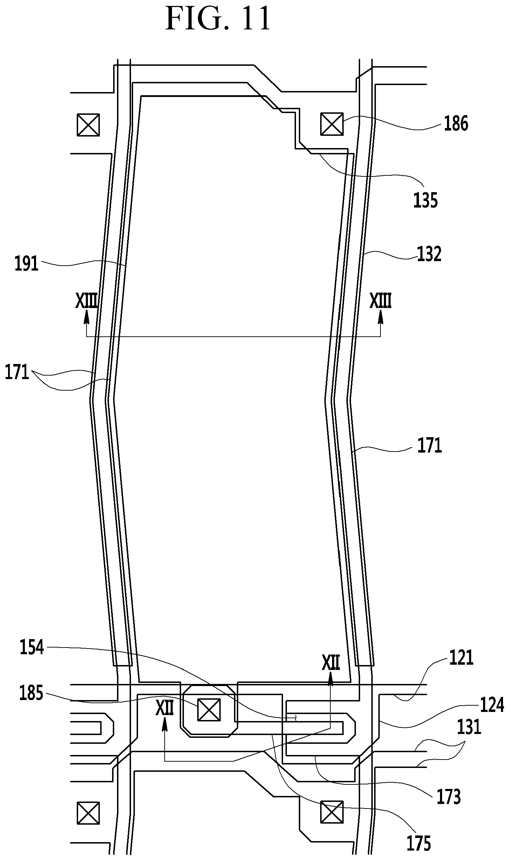

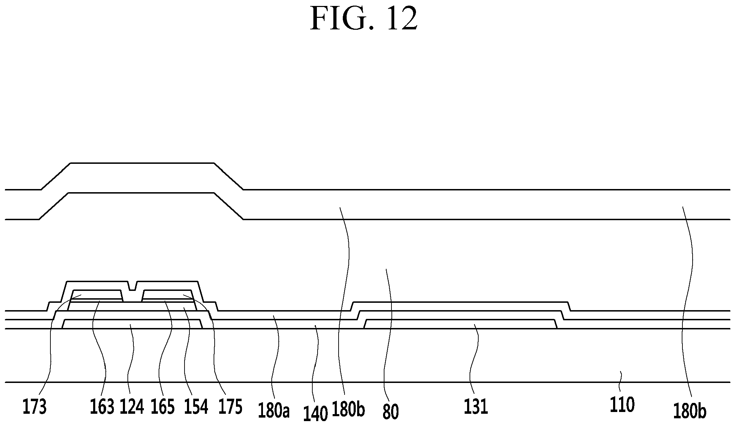

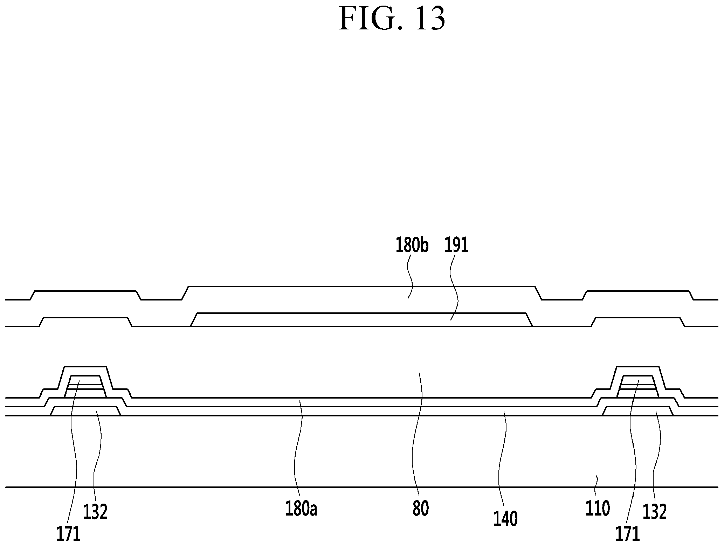

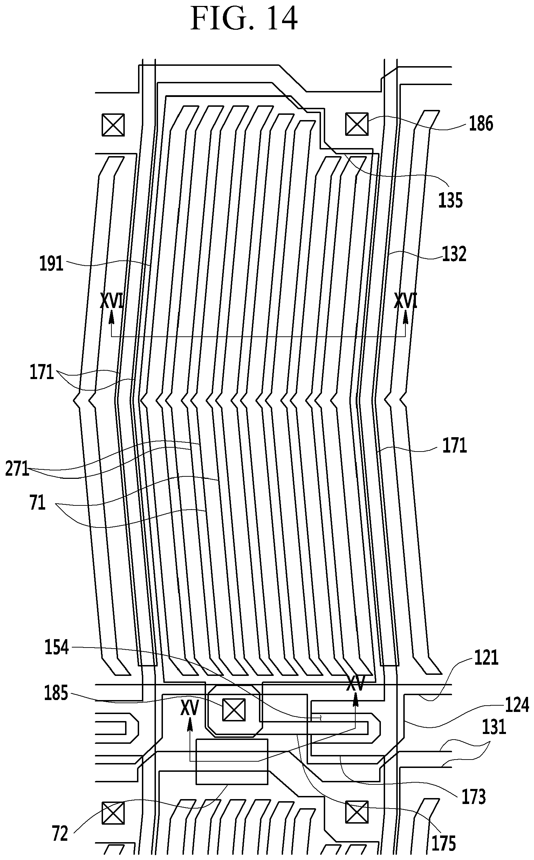

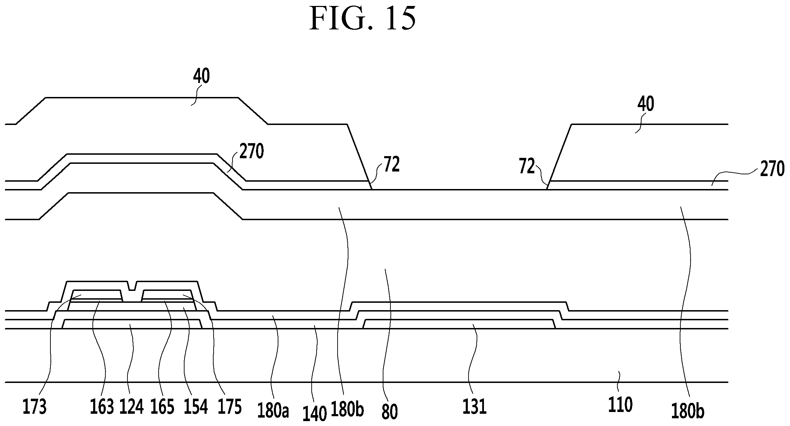

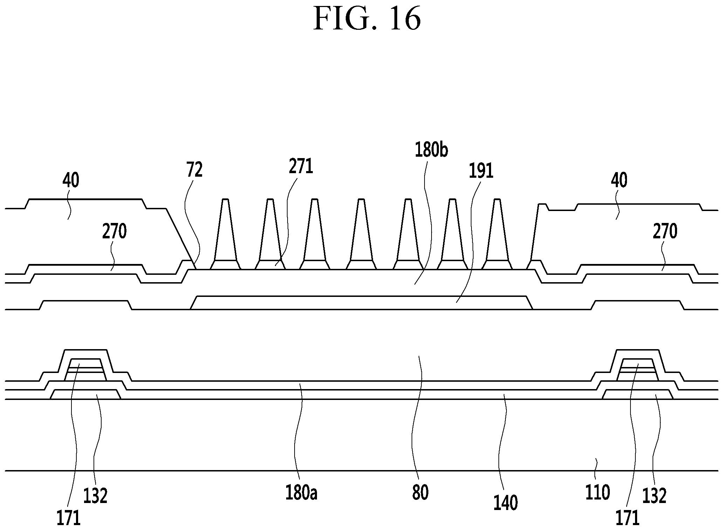

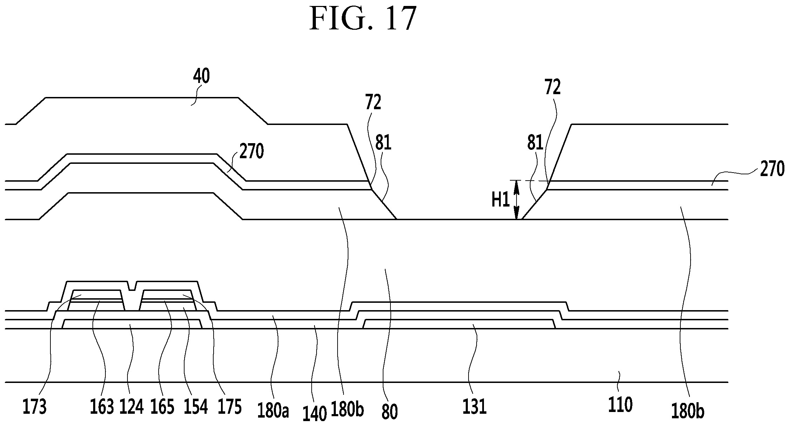

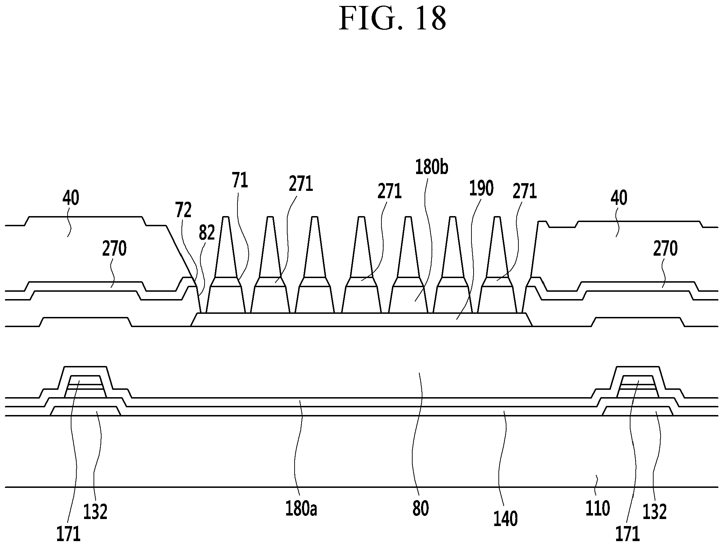

Next, a manufacturing method of an LCD according to an exemplary embodiment of the invention will be described with reference to FIGS. 11 to 18. FIG. 11 is a plan view partially showing a manufacturing process of an LCD according to an exemplary embodiment of the invention, FIG. 12 is a cross-sectional view of the LCD of FIG. 11 taken along the line XII-XII, and FIG. 13 is a cross-sectional view of the LCD of FIG. 11 taken along the line XIII-XIII. FIG. 14 is a plan view partially showing a manufacturing process of an LCD according to an exemplary embodiment of the invention, FIG. 15 is a cross-sectional view of the LCD of FIG. 14 taken along the line XV-XV, and FIG. 16 is a cross-sectional view of the LCD of FIG. 14 taken along the line XVI-XVI. FIG. 17 is a cross-sectional view partially showing a manufacturing process of an LCD according to an exemplary embodiment of the invention, taken along the line XV-XV of FIG. 14, and FIG. 18 is a cross-sectional view partially showing a manufacturing process of an LCD according to an exemplary embodiment of the invention, taken along the line XVI-XVI of FIG. 14.

Firstly, referring to FIGS. 11 to 13, on a first insulation substrate 110, a gate conductor (121, 124, 131, 132, and 135) including a gate line 121 and a common voltage line 131 is provided, a gate insulating layer 140 is deposited on the gate conductor (121, 124, 131, 132, and 135), and a semiconductor 154, ohmic contacts 163 and 165, and a data conductor (171, 173, and 175) including a data line 171 including a source electrode 173 and a drain electrode 175 are provided.

A first passivation layer 180a is defined on the data conductor (171, 173, and 175), the gate insulating layer 140, and the exposed portion of the semiconductor 154.

An organic layer 80 is defined on the first passivation layer 180a, and a pixel electrode 191 connected to the drain electrode 175 through a first contact hole 185 defined in the first passivation layer 180a and the organic layer 80 is provided.

A second passivation layer 180b is deposited on the pixel electrode 191.

Next, as shown in FIGS. 14 to 16, a transparent conductor is deposited on the second passivation layer 180b, a photosensitive film is deposited thereon and exposed and developed to form a photosensitive film pattern 40, and the transparent conductor is etched by using the photosensitive film pattern 40 as an etching mask to form a common electrode 270 including a plurality of third cutouts 71 positioned at the pixel area and a first cutout 72 positioned at a non-opening region overlapping the gate conductor such as the gate line 121 or the common voltage line 131. The common electrode 270 includes a plurality of branch electrodes 271 defined by the plurality of third cutouts 71, and the plurality of branch electrodes 271 overlaps the pixel electrode 191 of the plane shape.

Next, as shown in FIGS. 17 and 18, the second passivation layer 180b is etched by using the photosensitive film pattern 40 as the mask to form a second cutout 81 defined at the same position as the first cutout 72 of the common electrode 270 and having the same plane shape thereof, and a plurality of fourth cutouts 82 having the same plane shape as the plurality of third cutouts 71 of the common electrode 270 in the second passivation layer 180b. And then the photosensitive film pattern 40 is removed.

In this way, through one photosensitive film pattern 40, by defining a plurality of third cutouts 71 and the first cutout 72 of the common electrode 270, and the second cutout 81 and the fourth cutout 82 of the second passivation layer 180b, the manufacturing process is not complicated, and the height of the region where the first cutout 72 of the common electrode 270 and the second cutout 81 of the second passivation layer 180b are defined may be provided to be lower than the height of the other region by a first height H1.

Next, as shown in FIGS. 1 and 2, or FIGS. 4 and 5, a first spacer 325a and a second spacer 325b are provided on the first display panel 100 or the second display panel 200.

The first spacer 325a is provided at the position overlapping the TFT including the gate electrode 124, the semiconductor 154, the source electrode 173, and the drain electrode 175, and the second spacer 325b is provided at the position where the first cutout 72 of the common electrode 270 and the second cutout 81 of the second passivation layer 180b are defined.

Accordingly, the first spacer 325a and the facing display panel are not separated, and the interval W1 between the second spacer 325b and the facing display panel is greater than the first height H1.

Next, a sealant is coated on one among the first display panel 100 and the second display panel 200 and an LC layer 3 is dripped, and then the first display panel 100 and the second display panel 200 are aligned and adhered to face each other by the sealant to complete the LCD.

According to the manufacturing method of the LCD according to an exemplary embodiment of the invention, since the common electrode 270 and the second passivation layer 180b are etched by using one photosensitive film pattern 40, the first cutout 72 of the common electrode 270 and the second cutout 81 of the second passivation layer 180b are defined at the same position and have the same plane shape, and the plurality of third cutouts 71 of the common electrode 270 and the plurality of fourth cutouts 82 of the second passivation layer 180b are defined at the same position and have the same plane shape. That is, an edge of the first cutout 72 of the common electrode 270 defined at the non-opening region overlaps the edge of the second cutout 81 of the second passivation layer 180b, and the edge of a plurality of third cutouts 71 of the common electrode 270 defined at the pixel area overlaps the edge of the plurality of fourth cutouts 82 of the second passivation layer 180b.

By defining the plurality of third cutouts 71 and the first cutout 72 of the common electrode 270, and the second cutout 81 and the fourth cutout 82 of the second passivation layer 180b by using one photosensitive film pattern 40, the manufacturing process is not complicated, the height of the region where the first cutout 72 of the common electrode 270 and the second cutout 81 of the second passivation layer 180b are defined may be provided to be lower than the height of the other region by a first height H1.
In this way, according to the LCD and the manufacturing method thereof according to an exemplary embodiment of the invention, while the organic layer 80 having the substantially flat surface and the pixel electrode 191 and the common electrode 270 are disposed on one display panel, the step is defined between the region where the first cutout 72 of the common electrode 270 and the second cutout 81 of the second passivation layer 180b are defined and the other region, thereby widely maintaining the interval between the second spacer 325b as the sub-spacer and the facing display panel. By widely maintaining the interval between the second spacer 325b as the sub-spacer and the facing display panel, the pressure tolerance of the main spacer and the sub-spacer, and the LC drip margin, may be obtained while the difference between the height of the first spacer 325a as the main spacer and the height of the second spacer 325b as the sub-spacer is not largely provided.

## Claims

1. A liquid crystal display comprising:
a first display panel (100) which comprises:
a first substrate (110);
a plurality of signal lines (121, 131, 171) on the first substrate (110);
a first insulating layer (140, 180a) positioned on the plurality of signal lines (121,131,171);
an organic layer (80) on the first insulating layer (140, 180a);
a pixel electrode (191) positioned on the organic layer (80);
a second insulating layer (180b) positioned on the pixel electrode (191); and
a common electrode (270) positioned on the second insulating layer (180b) ;
a second display panel (200) which faces the first display panel and comprises a second substrate (210) facing the first substrate (110);
a first spacer (325a) and a second spacer (325b) positioned between the first display panel and the second display panel, and
a first cutout (72,72a) and a second cutout (81) at the same position as the first cutout which are disposed in the common electrode (270) and the second insulating layer (180b), respectively, outside of the pixel area, and partially overlap the plurality of signal lines (124, 131),
wherein the first spacer (325a) contacts the first display panel (100) and the second display panel (200); and
the second spacer (325b) overlaps the first cutout (72,72a) and the second cutout (81) and is separated from the first display panel (100) or the second display panel (200) by a first interval (W1).

2. The liquid crystal display of claim 1, wherein an edge of the first cutout (72) overlaps an edge of the second cutout (81).

3. The liquid crystal display of claim 2, wherein:
a plurality of third cutouts (71) is disposed in the common electrode (270) in the pixel area and overlaps the pixel electrode (191);
the common electrode (270) includes a plurality of branch electrodes provided by the plurality of third cutouts (71),
a plurality of fourth cutouts (82) is disposed in the second insulating layer (180b) at the same position as the plurality of third cutouts (71); and
an edge of the plurality of third cutouts (71) overlap an edge of the plurality of fourth cutouts (82).

4. The liquid crystal display of claim 3, wherein the first interval (W1) is larger than the sum of a thickness of the common electrode (270) and a thickness of the second insulating layer (180b).

5. The liquid crystal display of claim 4, wherein heights (Ha, Hb) of the first spacer (325a) and the second spacer (325b) are different from each other.

6. The liquid crystal display of claim 3, wherein:
the common electrode (270) is provided at a first pixel (PX1) and a second pixel (PX2) adjacent to each other;
the common electrode (270) further includes a fifth cutout (72b) overlapping the second spacer (325b);
the first cutout (72a) of the common electrode (270) is positioned at the first pixel ;
the fifth cutout (72b) of the common electrode (270) is positioned at the second pixels ; and
an interval (D1) between the plurality of third cutouts (71) and the first cutout (72a) of the common electrode (270) provided at the first pixel is different from an interval (D2) between the plurality of third cutouts (71) and the fifth cutout (72b) of the common electrode (270) provided at the second pixel

7. The liquid crystal display of claim 1, wherein the first interval (W1) is larger than the sum of a thickness of the common electrode (270) and a thickness of the second insulating layer (180b).

8. The liquid crystal display of claim 7, wherein heights (Ha, Hb) of the first spacer (325a) and the second spacer are different from each other.

9. A method of manufacturing a liquid crystal display comprising:
disposing a first substrate (110) in a first display panel (100);
disposing a plurality of signal lines (121, 131, 171) on the first substrate (110) in the first display panel (110);
disposing a first insulating layer (140, 180a) on the plurality of signal lines (121,131,171) in the first display panel (100);
disposing an organic layer (80) on the first insulating layer (140, 180a) in the first display panel (100); disposing a pixel electrode (191) on the organic layer (80);
disposing a second insulating layer (180b) on the pixel electrode (191) in the first display panel (100);
disposing a common electrode (270) on the second insulating layer (180b), and disposinng a first cutout (72) in the common electrode (270) outside of the pixel area and overlapping a portion of the signal lines (121, 131, 171) among the plurality of signal lines (121, 131, 171) in the first display panel (100);
disposing a second cutout (81) in the second insulating layer (180b) at the same position as the first cutout and overlapping the portion of the signal lines (121, 131, 171) among the plurality of signal lines (121, 131, 171) in the first display panel (100);
disposing a second substrate (210) in a second display panel (200) facing the first display panel (100); and
providing a first spacer (325a) and a second spacer (325b) positioned between the first display panel (100) and the second display panel (200), respectively,
wherein the first spacer (325a) contacts the first display panel (100) and the second display panel (200); and
the second spacer (325b) is provided at a position overlapping the first cutout (72) and the second cutout (81) and is separated from the first display panel (100) or the second display panel (200) by a first interval (W1)

10. The method of claim 9, wherein
the disposing of the first cutout (72) in the common electrode (270) and overlapping the portion of the signal lines (121,131,171) among the plurality of signal lines (121, 131, 171) and the disposing of the second cutout (81) in the second insulating layer (180b) and overlapping the portion of the signal lines (121, 131, 171) among the plurality of signal lines (121, 131, 171) are simultaneously performed by using one photosensitive film pattern.

11. The method of claim 10, wherein:
the disposing of the common electrode (270) further includes disposing a plurality of third cutouts (71) in the common electrode in the pixel area which are overlapping the pixel electrode (191);
the common electrode (270) includes a plurality of branch electrodes provided by the plurality of third cutouts (71),
the disposing of the second cutout (81) in the second insulating layer and overlapping the portion of the signal lines (121,131,171) among the plurality of signal lines (121, 131, 171) further includes disposing a plurality of fourth cutouts (82) in the second insulating layer (180b) at the same position as the plurality of third cutouts (71); and
the disposing of the plurality of third cutouts (71) and the disposing of the plurality of fourth cutouts (82) are simultaneously performed by using one photosensitive film pattern.

12. The method of claim 11, wherein the first interval (W1) is defined to be larger than the sum of a thickness of the common electrode (270) and a thickness of the second insulating layer (180b).

## Patentansprüche

1. Flüssigkristallanzeige, umfassend:
ein erstes Anzeigefeld (100), das Folgendes umfasst:
ein erstes Substrat (110);
eine Vielzahl von Signalleitungen (121, 131, 171) auf dem ersten Substrat (110);
eine erste Isolierschicht (140, 180a), die auf der Vielzahl von Signalleitungen (121, 131, 171) positioniert ist;
eine organische Schicht (80) auf der ersten Isolierschicht (140, 180a);
eine Pixelelektrode (191), die auf der organischen Schicht (80) positioniert ist;
eine zweite Isolierschicht (180b), die auf der Pixelelektrode (191) positioniert ist; und
eine gemeinsame Elektrode (270), die auf der zweiten Isolierschicht (180b) positioniert ist;
ein zweites Anzeigefeld (200), das dem ersten Anzeigefeld zugewandt ist und ein zweites Substrat (210) umfasst, das dem ersten Substrat (110) zugewandt ist;
ein erstes Abstandselement (325a) und ein zweites Abstandselement (325b), die zwischen dem ersten Anzeigefeld und dem zweiten Anzeigefeld positioniert sind; und
einen ersten Ausschnitt (72, 72a) und einen an der gleichen Position wie der erste Ausschnitt befindlichen zweiten Ausschnitt (81), die jeweils in der gemeinsamen Elektrode (270) und der zweiten Isolierschicht (180b) außerhalb des Pixelbereichs angeordnet sind und die Vielzahl von Signalleitungen (124, 131) teilweise überlappen;
wobei das erste Abstandselement (325a) in Kontakt mit dem ersten Anzeigefeld (100) und dem zweiten Anzeigefeld (200) ist; und
das zweite Abstandselement (325b) den ersten Ausschnitt (72, 72a) und den zweiten Ausschnitt (81) überlappt und von dem ersten Anzeigefeld (100) oder dem zweiten Anzeigefeld (200) durch einen ersten Abstand (W1) getrennt ist.

2. Flüssigkristallanzeige nach Anspruch 1, wobei
ein Rand des ersten Ausschnitts (72) einen Rand des zweiten Ausschnitts (81) überlappt.

3. Flüssigkristallanzeige nach Anspruch 2, wobei
eine Vielzahl von dritten Ausschnitten (71) in der gemeinsamen Elektrode (270) im Pixelbereich angeordnet ist und die Pixelelektrode (191) überlappt;
die gemeinsame Elektrode (270) eine Vielzahl von Zweigelektroden umfasst, die durch die Vielzahl von dritten Ausschnitten (71) bereitgestellt werden;
eine Vielzahl von vierten Ausschnitten (82) in der zweiten Isolierschicht (180b) an der gleichen Position wie die Vielzahl von dritten Ausschnitten (71) angeordnet ist;
ein Rand der Vielzahl von dritten Ausschnitten (71) einen Rand der Vielzahl von vierten Ausschnitten (82) überlappt.

4. Flüssigkristallanzeige nach Anspruch 3, wobei
der erste Abstand (W1) größer als die Summe einer Dicke der gemeinsamen Elektrode (270) und einer Dicke der zweiten Isolierschicht (180b) ist.

5. Flüssigkristallanzeige nach Anspruch 4, wobei
sich Höhen (Ha, Hb) des ersten Abstandelements (325a) und des zweiten Abstandselements (325b) voneinander unterscheiden.

6. Flüssigkristallanzeige nach Anspruch 3, wobei
die gemeinsame Elektrode (270) bei einem ersten Pixel (PX1) und einem zweiten Pixel (PX2) vorgesehen ist, die benachbart zueinander sind;
die gemeinsame Elektrode (270) ferner einen fünften Ausschnitt (72b) umfasst, der das zweite Abstandselement (325b) überlappt;
der erste Ausschnitt (72a) der gemeinsamen Elektrode (270) beim ersten Pixel positioniert ist;
der fünfte Ausschnitt (72b) der gemeinsamen Elektrode (270) beim zweiten Pixel positioniert ist; und
sich ein Abstand (D1) zwischen der Vielzahl von dritten Ausschnitten (71) und dem ersten Ausschnitt (72a) der gemeinsamen Elektrode (270), die bei dem ersten Pixel vorgesehen ist, von einem Abstand (D2) zwischen der Vielzahl von dritten Ausschnitten (71) und dem fünften Ausschnitt (72b) der gemeinsamen Elektrode (270), die beim zweiten Pixel vorgesehen ist, unterscheidet.

7. Flüssigkristallanzeige nach Anspruch 1, wobei
der erste Abstand (W1) größer als die Summe einer Dicke der gemeinsamen Elektrode (270) und einer Dicke der zweiten Isolierschicht (180b) ist.

8. Flüssigkristallanzeige nach Anspruch 7, wobei
sich Höhen (Ha, Hb) des ersten Abstandelements (325a) und des zweiten Abstandselements voneinander unterscheiden.

9. Verfahren zum Herstellen einer Flüssigkristallanzeige, umfassend:
Anordnen eines ersten Substrats (110) in einem ersten Anzeigefeld (100);
Anordnen einer Vielzahl von Signalleitungen (121, 131, 171) auf dem ersten Substrat (110) in dem ersten Anzeigefeld (110);
Anordnen einer ersten Isolierschicht (140, 180a) auf der Vielzahl von Signalleitungen (121, 131, 171) in dem ersten Anzeigefeld (100);
Anordnen einer organischen Schicht (80) auf der ersten Isolierschicht (140, 180a) in dem ersten Anzeigefeld (100);
Anordnen einer Pixelelektrode (191) auf der organischen Schicht (80);
Anordnen einer zweiten Isolierschicht (180b) auf der Pixelelektrode (191) in dem ersten Anzeigefeld (100);
Anordnen einer gemeinsamen Elektrode (270) auf der zweiten Isolierschicht (180b) und Anordnen eines ersten Ausschnitts (72) in der gemeinsamen Elektrode (270) außerhalb des Pixelbereichs und Überlappen eines Teils der Signalleitungen (121, 131, 171) unter der Vielzahl von Signalleitungen (121, 131, 171) in dem ersten Anzeigefeld (100);
Anordnen eines zweiten Ausschnitts (81) in der zweiten Isolierschicht (180b) an der gleichen Position wie der erste Ausschnitt und Überlappen des Teils der Signalleitungen (121, 131, 171) unter der Vielzahl von Signalleitungen (121, 131, 171) in dem ersten Anzeigefeld (100);
Anordnen eines zweiten Substrats (210) in einem zweiten Anzeigefeld (200), das dem ersten Anzeigefeld (100) zugewandt ist;
Vorsehen eines ersten Abstandselements (325a) und eines zweiten Abstandselements (325b), die jeweils zwischen dem ersten Anzeigefeld (100) und dem zweiten Anzeigefeld (200) positioniert sind;
wobei das erste Abstandselement (325a) in Kontakt mit dem ersten Anzeigefeld (100) und dem zweiten Anzeigefeld (200) ist; und
das zweite Abstandselement (325b) an einer den ersten Ausschnitt (72) und den zweiten Ausschnitt (81) überlappenden Position vorgesehen ist und von dem ersten Anzeigefeld (100) oder dem zweiten Anzeigefeld (200) durch einen ersten Abstand (W1) getrennt ist.

10. Verfahren nach Anspruch 9, wobei
das Anordnen des ersten Ausschnitts (72) in der gemeinsamen Elektrode (270) und das Überlappen des Teils der Signalleitungen (121, 131, 171) unter der Vielzahl von Signalleitungen (121, 131, 171) sowie das Anordnen des zweiten Ausschnitts (81) in der zweiten Isolierschicht (180b) und das das Überlappen des Teils der Signalleitungen (121, 131, 171) unter der Vielzahl von Signalleitungen (121, 131, 171) gleichzeitig durchgeführt werden, indem ein lichtempfindliches Filmmuster verwendet wird.

11. Verfahren nach Anspruch 10, wobei
das Anordnen der gemeinsamen Elektrode (270) ferner das Anordnen einer Vielzahl von dritten Ausschnitten (71) in der gemeinsamen Elektrode im Pixelbereich umfasst, welche die Pixelelektrode (191) überlappen; die gemeinsame Elektrode (270) eine Vielzahl von Zweigelektroden umfasst, die durch die Vielzahl von dritten Ausschnitten (71) bereitgestellt werden;
das Anordnen des zweiten Ausschnitts (81) in der zweiten Isolierschicht und das Überlappen des Teils der Signalleitungen (121, 131, 171) unter der Vielzahl von Signalleitungen (121, 131, 171) ferner das Anordnen einer Vielzahl von vierten Ausschnitten (82) in der zweiten Isolierschicht (180b) an der gleichen Position wie die Vielzahl von dritten Ausschnitten (71) umfasst; und
das Anordnen der Vielzahl von dritten Ausschnitten (71) und das Anordnen der Vielzahl von vierten Ausschnitten (82) gleichzeitig durchgeführt werden, indem ein lichtempfindliches Filmmuster verwendet wird.

12. Verfahren nach Anspruch 11, wobei
der erste Abstand (W1) so definiert wird, dass er größer als die Summe einer Dicke der gemeinsamen Elektrode (270) und einer Dicke der zweiten Isolierschicht (180b) ist.

## Revendications

1. Un affichage à cristaux liquides comprenant:
un premier panneau d'affichage (100) qui comprend:
un premier substrat (110);
une pluralité de lignes de signal (121, 131, 171) sur le premier substrat (110);
une première couche d'isolation (140, 180a) positionnée sur la pluralité de lignes de signal (121, 131, 171);
une couche organique (80) sur la première couche d'isolation (140, 180a);
une électrode de pixel (191) positionnée sur la couche organique (80) une deuxième couche d'isolation (180b) positionnée sur l'électrode de pixel (191); et
une électrode ordinaire (270) positionnée sur la deuxième couche d'isolation (180b);
un deuxième panneau d'affichage (200) qui fait face au premier panneau d'affichage et comprend un deuxième substrat (210) faisant face au premier substrat (110);
une première entretoise (325a) et une deuxième entretoise (325b) positionnées entre le premier panneau d'affichage et le deuxième panneau d'affichage, et
une première découpe (72, 72a) et une deuxième découpe (81) dans la même position que la première découpe qui sont disposées dans l'électrode ordinaire (270) et la deuxième couche d'isolation (180b), respectivement, à l'extérieur de la zone de pixel,
et qui chevauchent partiellement la pluralité des lignes de signal (124, 131), où la première entretoise (325a) est en contact avec le premier panneau d'affichage (100) et le deuxième panneau d'affichage (200); et
la deuxième entretoise (325b) chevauche la première découpe (72, 72a) et la deuxième découpe (81) et est séparée du premier panneau d'affichage (100) ou du deuxième panneau d'affichage (200) par un premier intervalle (W1).

2. L'affichage à cristaux liquides de la revendication 1, où
un bord de la première découpe (72) chevauche un bord de la deuxième découpe (81).

3. L'affichage à cristaux liquides de la revendication 2, où:
une pluralité de troisièmes découpes (71) est disposée dans l'électrode ordinaire (270) dans la zone de pixel et chevauche l'électrode de pixel (191);
l'électrode ordinaire (270) inclut une pluralité d'électrodes de branche fournies par la pluralité des troisièmes découpes (71),
une pluralité des quatrièmes découpes (82) est disposée dans la deuxième couche d'isolation (180b) dans la même position que la pluralité de troisièmes découpes (71); et
un bord de la pluralité de troisièmes découpes (71) chevauche un bord de la pluralité des quatrièmes découpes (82).

4. L'affichage à cristaux liquides de la revendication 3, où
le premier intervalle (W1) est plus grand que la somme d'une épaisseur de l'électrode ordinaire (270) et une épaisseur de la deuxième couche d'isolation (180b).

5. L'affichage à cristaux liquides de la revendication 4, où des hauteurs (Ha, Hb) de la première entretoise (325a) et la deuxième entretoise (325b) sont différentes l'une de l'autre.

6. L'affichage à cristaux liquides de la revendication 3, où:
l'électrode ordinaire (270) est fournie à un premier pixel (PX1) et un deuxième pixel (PX2) adjacents l'un à l'autre ;
l'électrode ordinaire (270) inclut de plus une cinquième découpe (72b) chevauchant la deuxième entretoise (325b) ;
la première découpe (72a) de l'électrode ordinaire (270) est positionnée au niveau du premier pixel;
la cinquième découpe (72b) de l'électrode ordinaire (270) est positionnée au niveau du deuxième pixel ; et
un intervalle (D1) entre la pluralité des troisièmes découpes (71) et la première découpe (72a) de l'électrode ordinaire (270) fourni au niveau du premier pixel est différent d'un intervalle (D2) entre la pluralité des troisièmes découpes (71) et la cinquième découpe (72b) de l'électrode ordinaire (270) fourni au niveau du deuxième pixel.

7. L'affichage à cristaux liquides de la revendication 1, où le premier intervalle (W1) et supérieur à la somme d'une épaisseur de l'électrode ordinaire (270) et une épaisseur de la deuxième couche d'isolation (180b).

8. L'affichage à cristaux liquides de la revendication 7, où
des hauteurs (Ha, Hb) de la première entretoise (325a) et la deuxième entretoise sont différentes l'une de l'autre.

9. Une méthode de fabrication d'un affichage à cristaux liquides comprenant:
le dépôt d'un premier substrat (110) dans un premier panneau d'affichage (100);
le dépôt d'une pluralité de lignes de signal (121, 131, 171) sur le premier substrat (110) dans le premier panneau d'affichage (110);
le dépôt d'une première couche d'isolation (140, 180a) sur la pluralité des lignes de signal (121, 131, 171) dans le premier panneau d'affichage (100);
le dépôt d'une couche organique (80) sur la première couche d'isolation (140, 180a) dans le premier panneau d'affichage (100); le dépôt d'une électrode de pixel (191) sur la couche organique (80);
le dépôt d'une deuxième couche d'isolation (180b) sur l'électrode de pixel (191) dans le premier panneau d'affichage (100);
le dépôt d'une électrode ordinaire (270) sur la deuxième couche d'isolation (180b),
et le dépôt d'une première découpe (72) dans l'électrode ordinaire (270) à l'extérieur de la zone de pixel et chevauchant une portion des lignes de signal (121, 131, 171) parmi la pluralité des lignes de signal (121, 131, 171) dans le premier panneau d'affichage (100);
le dépôt d'une deuxième découpe (81) dans la deuxième couche d'isolation (180b) dans la même position que la première découpe et chevauchant la portion des lignes de signal (121, 131, 171) parmi la pluralité des lignes de signal (121, 131, 171) dans le premier panneau d'affichage (100);
le dépôt d'un deuxième substrat (210) dans un deuxième panneau d'affichage (200) faisant face au premier panneau d'affichage (100); et
la fourniture d'une première entretoise (325a) et d'une deuxième entretoise (325b) positionnées entre le premier panneau d'affichage (100) et le deuxième panneau d'affichage (200), respectivement,
où la première entretoise (325a) est en contact avec le premier panneau d'affichage (100) et le deuxième panneau d'affichage (200); et
la deuxième entretoise (325b) est fournie dans une position chevauchant la première découpe (72) et la deuxième découpe (81) et est séparée du premier panneau d'affichage (100) ou du deuxième panneau d'affichage (200) par un premier intervalle (W1).

10. La méthode de la revendication 9, où le dépôt de la première découpe (72) dans l'électrode ordinaire (270) et le chevauchement de la portion des lignes de signal (121, 131, 171) parmi la pluralité des lignes de signal (121, 131, 171) et le dépôt de la deuxième découpe (81) dans la deuxième couche d'isolation (180b) et le chevauchement de la portion des lignes de signal (121, 131, 171) parmi la pluralité des lignes de signal (121, 131, 171) sont effectués simultanément par l'utilisation d'un modèle de film photosensible.

11. La méthode de la revendication 10, où:
le dépôt de l'électrode ordinaire (270) inclut de plus le dépôt d'une pluralité de troisièmes découpes (71) dans l'électrode ordinaire dans la zone de pixel qui chevauchent l'électrode de pixel (191);
l'électrode ordinaire (270) inclut une pluralité d'électrodes de branche fournies par la pluralité de troisièmes découpes (71),
le dépôt de la deuxième découpe (81) dans la deuxième couche d'isolation et le chevauchement de la portion des lignes de signal (121, 131, 171) parmi la pluralité de lignes de signal (121, 131, 171) inclut de plus le dépôt d'une pluralité de quatrièmes découpes (82) dans la deuxième couche d'isolation (180b) dans la même position que la pluralité des troisièmes découpes (71); et
le dépôt de la pluralité des troisièmes découpes (71) et le dépôt de la pluralité des quatrièmes découpes (82) sont simultanément réalisés par l'utilisation d'un modèle de film photosensible.

12. La méthode de la revendication 11, où le premier intervalle (W1) est défini pour être plus grand que la somme d'une épaisseur de l'électrode ordinaire (270) et une épaisseur de la deuxième couche d'isolation (180b).
